Europäisches Patentamt

(19) European Patent Office

Office européen des brevets

(11) Veröffentlichungsnummer: **0 063 725**
**B1**

(12) **EUROPÄISCHE PATENTSCHRIFT**

(45) Veröffentlichungstag der Patentschrift:
25.09.85

(21) Anmeldenummer: 82102951.9

(22) Anmeldetag: 06.04.82

(51) Int. Cl.⁴: **B 25 D 9/08**, B 25 D 9/26,
B 25 D 11/12, F 16 C 3/28,
F 16 H 21/20, F 16 H 21/36

(54) **Bohr- und Meisselhammer.**

(30) Priorität: 28.04.81 DE 3116851

(43) Veröffentlichungstag der Anmeldung:
03.11.82 Patentblatt 82/44

(45) Bekanntmachung des Hinweises auf die Patenterteilung:
25.09.85 Patentblatt 85/39

(84) Benannte Vertragsstaaten:
CH FR GB LI NL SE

(56) Entgegenhaltungen:
DE - A - 2 339 822
DE - A - 2 758 989
DE - A - 2 759 136
DE - A - 2 938 206
DE - C - 486 889
FR - A - 547 973
US - A - 3 305 031

PRODUCT ENGINEERING, 12. September 1966, Seite
102, New York, USA "Cycloid gear mechanism controls
stroke of pump"
MACHINE DESIGN, Band 52, Nr. 22, 25. September 1980,
Seite 45, Cleveland, USA "variable-stroke converter
runs in a ring"

(73) Patentinhaber: HILTI Aktiengesellschaft,
FL-9494 Schaan (LI)

(72) Erfinder: Goepfert, Peter, Dipl.-Ing., Kehrstrasse 2,
CH-8117 Fällanden (CH)

(74) Vertreter: Wildi, Roland, Hilti Aktiengesellschaft
Patentabteilung, FL-9490 Schaan (LI)

## Beschreibung

Die Erfindung betrifft einen Bohr- und Meisselhammer mit einem in einem Führungszylinder hin- und herbewegbaren Erregerkolben zum Antrieb eines auf das Werkzeug einwirkenden Schlagkolbens, mit einem an dem Erregerkolben angelenkten, mit einem Kurbelzapfen verbundenen Pleuel und mit einem Planetengetriebe mit einem angetriebenen Planententräger, mit einem auf dem Planetenträger gelagerten, angetriebenen Planetenzahnrad, das achsparallel und betriebsfest mit dem Kurbelzapfen verbunden ist, und mit einem feststehenden, innen verzahnten, mit dem Plantenzahnrad kämmenden Zahnkranz, wobei der Wälzkreisdurchmesser des Zahnkranzes das Doppelte des Wälzkreisdurchmessers des Planetenzahnrades beträgt und die Achse des Kurbelzapfens ausserhalb der Mitte des Planetenzahnrades verläuft.

Die üblichen Bohr- und Meisselhämmer weisen einen mit einem Drehantrieb verbundenen Kurbelzapfen auf, der über ein Pleuel einen in einem Zylinder geführten Erregerkolben antreibt. Am anderen Ende des Zylinders ist ein Schlagkolben angeordnet, welcher auf das in das Schlagwerk eingesetzte Werkzeug einwirkt. Durch die pneumatische Koppelung zwischen den beiden Kolben wird die Rückübertragung von harten, mechanischen Stössen auf den Kurbelbetrieb vermieden.

Es hat sich herausgestellt, dass derartige Schlagwerke, die einen konstruktiv festgelegten Werzeughub aufweisen, nur für bestimmte Arbeiten und zur Verwendung bestimmter Werkzeuge einsetzbar sind.

Für andere, empfindlichere Arbeiten, bei welchen der Werkzeughub und die Schlagkraft zu hoch sind, muss deshalb ein eigenes, entsprechend ausgelegtes Gerät verwendet werden.

Weiterhin geht aus dem Artikel «Cycloid Gear Mechanism Controls Stroke of Pump», veröffentlicht in Product Engineering, Sept. 12, 1966, S. 102 eine Dosierpumpe für Flüssigkeiten oder flüchtige Medien hervor, deren Hub mittels eines Planetengetriebes eingestellt werden kann. Zur Änderung der Drehwinkellage des Zahnkranzes dieses Planetengetriebes ist an der Aussenseite des Zahnkranzes ein Verstellgriff ausgebildet, der sich im wesentlichen tangential zum Zahnkranz erstreckt; dieser Verstellgriff kann in seiner jeweiligen Lage an Gehäuseteilen festgestellt werden, die das Planetengetriebe tragen.

Ein Bohr- und Meisselhammer der angegebenen Gattung geht schliesslich aus der DE-OS 2 938 206 hervor, bei dem jedoch keine Verstellung des Werzeughubs und der Schlagkraft möglich ist.

Der Erfindung liegt deshalb die Aufgabe zugrunde, einen Bohr- und Meisselhammer der angegebenen Gattung zu schaffen, dessen Hub mittels einfacher Bedienungselemente von aussen her stufenlos verstellt werden kann, und zwar auch während des Betriebs des zugeordneten Schlagwerks.

Diese Aufgabe wird erfindungsgemäss dadurch gelöst, dass zur Verstellung des Hubes des Erregerkolbens ein auf die Lage des Kurbelzapfens einwirkender, feststellbarer Verstellgriff vorgesehen ist, der zum Ändern der Drehwinkellage des Zahnkranzes an dessen Aussenseite angebracht ist, sich im wesentlichen radial zu dem Zahnkranz erstreckt und an das Planetengetriebe tragenden Gehäuseteilen in seiner jeweiligen Lage feststellbar ist, dass der Verstellgriff in zwei bogenförmigen Aussparungen der Gehäuseteile angeordnet ist und einen am Zahnkranz befestigten Gewindebolzen aufweist, auf dessen Aussenseite eine konische, mit der einen Aussparung in Klemmeingriff bringbare, verschiebbare Büchse aufgesetzt ist, auf die mittels des Gewindebolzens ein Klemmkopf aufschraubbar ist.

Zweckmässige Ausführungsformen sind in den Unteransprüchen zusammengestellt.

Die mit der Erfindung erzielten Vorteile beruhen auf folgender Funktionsweise: Zum Antrieb des Kurbelzapfens dient ein Planetengetriebe, bei dem die Abmessungen des Planetenrades und des innen verzahnten Zahnkranzes derart festgelegt sind, dass jeder Punkt auf dem Wälzkreis des Planetenrades einer geradlinigen Bahnkurve folgt. Die Achse des Kurbelzapfens schneidet den Wälzkreis des Planetenrades, mit dem der Kurbelzapfen fest verbunden ist, so dass der Kurbelzapfen ebenfalls eine oszillierende Bewegung längs einer Geraden ausführt. Liegt die Achse innerhalb des Wälzkreises, so läuft sie auf einer etwa einer Ellipse entsprechenden Zykloide um. Die Lage dieser Geraden bzw. der Ellipse befindet sich in fester räumlicher Zuordnung zur Lage des Zahnkranzes, so dass eine Drehung des Zahnkranzes um seine Achse eine entsprechende Schwenkbewegung der Geraden bzw. der grossen Ellipsenachse des Kurbelzapfens zur Folge hat. Da der Hub des über ein Pleuel mit dem Kurbelzapfen verbundenen Erregerkolbens des Schlagwerkes der Projektion der Bewegungsbahn des Kurbelzapfens um die Achse der Führung des Kolbens, nämlich des Führungszylinders, entspricht, lässt sich also durch Drehen des Zahnkranzes um 90° der Kolbenhub vom vollen Hub, der dem Wälzkreisdurchmesser des Zahnkranzes bzw. der grossen Achse entspricht, bis auf fast Null bzw. auf die Länge der kleinen Ellipsenachse verändern.

Die Einrichtung zur Drehung der Drehwinkellage des Zahnkranzes muss in der Lage sein, den Zahnkranz in der einmal gewählten Lage zu fixieren, da sonst die Kolbenkräfte den Zahnkranz verdrehen würden. Da jedoch der Verstellgriff fixiert werden kann, lässt sich nicht nur eine besonders einfache Verstellung erreichen, ohne dass die Winkellage des Zahnkranzes durch die Kolbenkräfte geändert werden kann, sondern es lässt sich auch die jeweilige Lage des Kolbenhubes von aussen erkennen; dabei können am Gehäuse Rastkerben oder ähnliche Markierungen angebracht werden, die jeweils durch Kennzeichnungen einem bestimmten Arbeitsgang zugeordnet sind, so dass sich die Handhabung des Schlagwerkzeuges auch für Ungeübte stark vereinfacht.

Durch das Zusammenwirken von Klemmkopf und konischer Büchse lässt sich der Verstellgriff nicht nur in jeder Winkellage fixieren, sondern kann zum Verstellen bei im Betrieb befindlichen Schlagwerk auch nur so wenig gelockert werden, dass eine Verstellung von Hand möglich ist, ohne dass die vom Schlagwerk auf den Zahnkranz rückwirkenden Kräfte diesen ihrerseits selbsttätig versehentlich verstellen. Ausserdem ermöglicht dieses Merkmal für leichte Schlagwerke eine stufenlose Verstellung, während es für grössere Schlagwerke zweckmässig ist, die Innenflanken der bogenförmigen Aussparung mit einander gegenüberliegenden Vertiefungen derart zu versehen, dass die konische Büchse formschlüssig aufgenommen werden kann.

Der Gewindebolzen sollte an beiden Enden ein Gewinde tragen, von denen das eine in den Zahnkranz eingeschraubt und dort gesichert wird, während das andere Gewinde zum Aus- und Einschrauben des Klemmkopfes dient, der wiederum mit einem zugehörigen Muttergewinde versehen ist. Dieses zweite Gewinde kann gegebenenfalls als Feingewinde ausgebildet sein, um höhere Klemmkräfte zu ermöglichen.

Wie bereits oben erläutert wurde, gestattet dieser Bohr- und Meisselhammer die Verstellung des Kolbenhubes vom vollen Hub bis nahezu auf den Hub Null, wobei gleichzeitig auch die Kolbengeschwindigkeit verringert wird. Es hat sich in der Praxis herausgestellt, dass die Schlagwerke nur einen Verstellbereich aufweisen sollten, der bis zu dem etwa 0,7fachen des Maximalhubes herabreicht. Es wird demgemäss vorgeschlagen, dass der Zahnkranz aus einer Lage, in der die Bahnkurve des Kurbelzapfens parallel zu der Führung des Kolbens verläuft und in der also der Maximalhub erzielt wird, um nur etwa 45° zu einer Seite hin verschwenkbar angeordnet ist. Durch diese Ausgestaltung wird der oben als besonders zweckmässig bezeichnete Hubbereich erreicht, während andererseits durch die Verstellbegrenzung verhindert wird, dass die auf die Zähne von Planetenrad und Zahnkranz einwirkenden Querkräfte zu gross werden. Dieser Kurbeltrieb ist also für Bohr- und Meisselhämmer besonders geeignet, da er relativ leicht ausgeführt werden kann, weil die Grösse der auf die Verzahnung einwirkenden Querkräfte begrenzt bleibt.

Die Erfindung wird im folgenden anhand eines Ausführungsbeispiels unter Bezugnahme auf die beiliegenden, schematischen Zeichnungen näher erläutert. Es zeigen:

Fig. 1 eine Ansicht des Planetengetriebes des Bohr- und Meisselhammers,

Fig. 2 eine Ansicht des gesamten Planetengetriebes, jedoch ohne Verstellgriff,

Fig. 3 einen Axialschnitt durch das in den Bohr- und Meisselhammer eingebaute Planetengetriebe, und

Fig. 4 eine Ansicht des in Fig. 3 dargestellten Planetengetriebes.

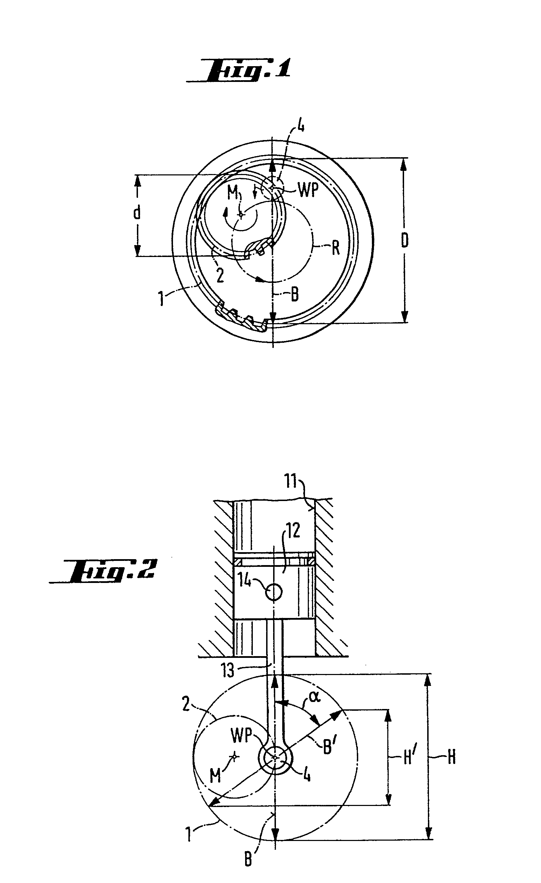

In Fig. 1 ist ein stillstehender, innen verzahnter Zahnkranz 1 zu erkennen, in dem ein Planetenrad 2 mit dem Mittelpunkt M abrollt. Dieses Planetenrad 2 führt eine Drehung um seinen Mittelpunkt M in Richtung des um den Mittelpunkt eingezeichneten Pfeils durch, wobei dieser Mittelpunkt seinerseits wiederum einer kreisförmigen Bahnkurve R in Pfeilrichtung folgt.

Ein Wälzkreispunkt WP auf dem Planetenrad 2 beschreibt nun beim Abrollen auf der Innenverzahnung des Zahnkranzes 1 eine sogenannte «Hypozykloide» in der Ebene senkrecht zur Achse der Innenverzahnung. Wird das Verhältnis des Durchmessers D der Innenverzahnung zum Durchmesser d der Verzahnung des Planetenrades 2 derart gewählt, dass es genau den Wert «2» hat, dann entartet diese Hypozykloide zu einer Geraden, so dass der Wälzpunkt WP beim Umlaufen des Planetenrades 2 einer geradlinigen Bahn B folgt, auf welcher er sich hin- und herbewegt.

Auf dem Planetenrad 2 ist achsparallel zu diesem ein Kurbelzapfen 4 derart befestigt, dass dessen Achse genau den Wälzkreis im eben genannten Wälzpunkt WP schneidet.

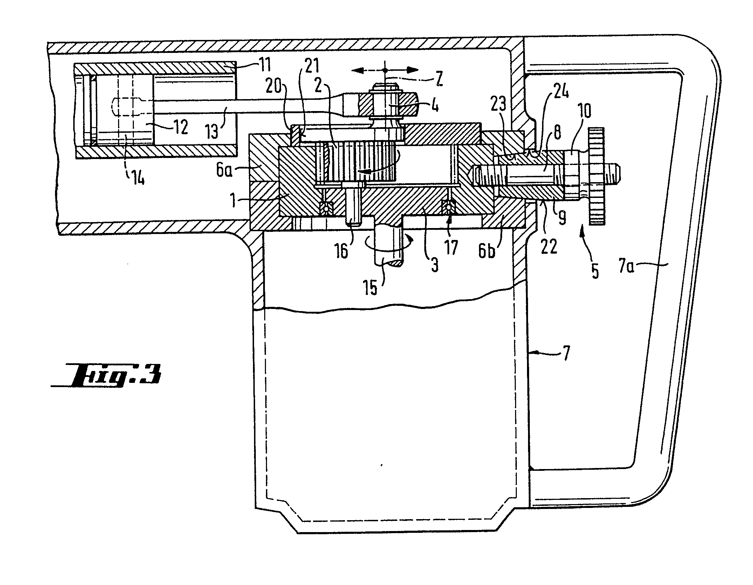

Wie in Fig. 2 gezeigt, ist das eine Auge eines Pleuels 13 am Kurbelzapfen 4 (WP) angebracht, während das andere Auge (nicht dargestellt) des Pleuels am Pleuelzapfen 14 eines Erregerkolbens 12 befestigt ist. Letzterer ist innerhalb eines Führungszylinders 11 geradlinig verschieblich angeordnet und ist Teil eines aus Vereinfachungsgründen nicht näher dargestellten, an sich bekannten Schlagwerkes, bei welchem ein ebenfalls im Führungszylinder 11 hin und her verschiebbarer Schlagkolben auf ein Werkzeug einwirkt. Wie aus Fig. 2 ersichtlich ist, ist die Mittelachse des Zylinders 11 bezüglich des Planetengetriebes derart angeordnet, dass sie genau eine Veränderung der Bewegungsbahn B des Kurbelzapfens 4 bildet.

Wird nun der nur mit seinem Wälzkreis dargestellte Zahnkranz 1 um den Winkel geschwenkt, dann nimmt das Planetengetriebe eine neue Lage ein, in welcher die ursprüngliche Bahnkurve B des Kurbelzapfens 4 ebenfalls eine um den Winkel bezüglich der Ausgangslage veränderte, neue Lage B′ einnimmt. Der ursprüngliche Kolbenhub H verändert sich nunmehr zu einem neuen, kleineren Kolbenhub H′.

Da der Zahnkranz 1 ein beim Betrieb festliegendes Teil ist, kann dieser ohne weiteres mit einer Verstelleinrichtung verbunden werden, welche dessen Verstellung selbst im Betrieb ermöglicht.

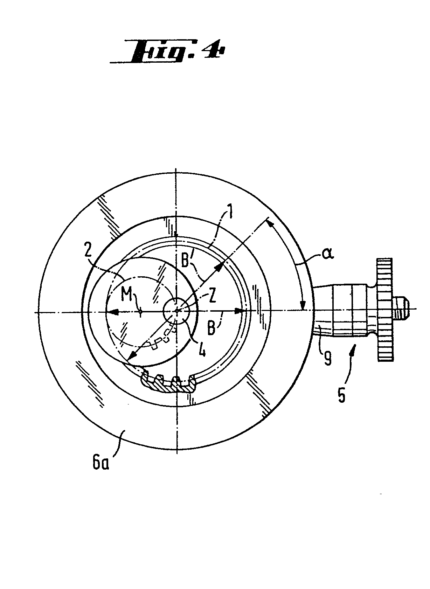

Das in Fig. 1 und 2 nur schematisch dargestellte Planetengetriebe ist in Fig. 3 und 4 detaillierter, in einem Bohr- und Meisselhammer eingebaut, dargestellt.

Wie aus Fig. 3 ersichtlich ist, ist koaxial zur Mittelachse Z des Getriebes ein Planetenträger 3 angeordnet, welcher einen sich aus dem Getriebe heraus erstreckenden Antriebszapfen 15 aufweist, der seinerseits mit einem motorischen Drehantrieb des Bohr- und Meisselhammers in an sich bekannter Weise verbunden ist.

Exzentrisch ist im Planetenträger 3 achsparallel zu diesem ein Zapfen 16 gelagert, welcher eine axiale Verlängerung des Planetenrades 2 bildet.

Der Planetenträger 3 ist über eine nur schematisch gezeigte Lagerung 17 im Zahnkranz 1 derart gelagert, dass die Aussenverzahnung des Planetenrades 2 bei Drehung des Planetenträgers 3 in Pfeilrichtung an der Innenverzahnung des Zahnkranzes 1 abläuft, wobei dann das Planetenrad 2 eine Drehung in Pfeilrichtung durchführt.

Auf der vom Planetenträger 3 abgewandten Seite des Zahnkranzes 1 überragt diese ein mit dem Planetenrad 2 fest verbundener Flansch, der auf seiner vom Planetenrad 2 abgewandten Seite den Kurbelzapfen 4 trägt. Wie aus der Zeichnung ersichtlich, trifft die Mittelachse des Kurbelzapfens 4 genau auf den Wälzkreis der Verzahnung des Planetenrades 2. In der in den Fig. 3 und 4 gezeigten Lage fällt ferner die Mittelachse des Kurbelzapfens 4 mit der Achse Z zusammen, woraus ersichtlich ist, dass das Wälzkreisverhältnis zwischen Innenverzahnung und Planetenradverzahnung Zwei beträgt. Bei der Drehung des Planetenträgers 3 und somit des Planetenrades 2 folgt damit der Kurbelzapfen 4 mit seiner Achse einer geradlinigen Bahnkurve in Pfeilrichtung, welche in der Zeichenebene liegt.

Am Kurbelzapfen 4 ist mittels eines Gleitlagers das Pleuel 13 angelenkt, das über den Pleuelzapfen 14 den Erregerkolben 12 im Führungszylinder 11 in hin- und hergehende Bewegung versetzt.

Der Zahnkranz 1 ist an seiner Aussenseite axial unverschieblich in zwei Halteringen 6a, 6b gelagert, die ihrerseits in einem Gerätegehäuse 7 mit Griff 7a festgelegt und somit Teile des Gerätegehäuses sind. Zwischen der den Zahnkranz 1 an seiner Oberseite umgreifenden Innenkante des oberen Halteringes 6a ist drehbar eine Scheibe 20 gelagert, welche eine Aussparung 21 aufweist, in der der Flansch des Planetenrades 2 drehbar gelagert ist. Diese Scheibe 20 liefert somit eine zusätzliche Lagerung des Planetenrades 2, so dass dieses beiderseits der Verzahnung 1/2 und nicht nur fliegend gelagert ist.

Auf der rechten Seite der Zeichnung weisen die beiden Halteringe 6a, 6b sowie das Gerätegehäuse 7 sich deckende, bogenförmig erstreckende Aussparungen 23, 24 auf; durch die Mitte dieser Aussparungen verläuft ein Gewindezapfen 8, der mit einem zylindrischen Schaftabschnitt versehen ist, an dessen beiden Enden jeweils ein Gewinde angeordnet ist. Der Gewindezapfen 8 erstreckt sich radial zum Zahnkranz 1, welcher ein Muttergewinde aufweist, in das das eine Ende des Gewindezapfens 8 eingeschraubt ist.

Diese Schraubverbindung ist gegen Lösen gesichert, nämlich über den Schaft des Gewindezapfens 8 ist eine Büchse 9 aufgeschoben, welche einen Aussenkonus 22 aufweist, der mit dem konischen Profil der Aussparung 23 in den Halteringen 6a, 6b übereinstimmt und in diese hineinreicht.

An der Aussenseite der Büchse 9 ist auf das dort angeordnete Gewinde des Gewindezapfens 8 ein als Rändelmutter ausgebildeter Klemmkopf 10 aufgeschraubt.

Wird der Klemmkopf 10 gelöst, d.h. vom Gewindezapfen 8 abgeschraubt, dann kann die konische Büchse 9 radial nach aussen gelöst werden, so dass der Zahnkranz 1 zur Drehung innerhalb der Halteringe 6a, 6b beweglich ist. Um diese Drehung herbeizuführen, dient die aus Klemmkopf 10, konischer Büchse 9 und Gewindebolzen 8 gebildete Einheit als Verstellgriff 5.

Die in Umfangsrichtung des Zahnkranzes 1 gemessene Längenerstreckung der Aussparung 24 bildet hierbei die Endanschläge für die Büchse 9 und damit für den Verstellweg des Zahnkranzes 1.

In Fig. 4 ist die Draufsicht auf das in Fig. 3 dargestellte Planetengetriebe gezeigt, wobei der besseren Deutlichkeit halber das Pleuel 13 weggelassen ist.

Wie aus Fig. 4 ersichtlich, kann der Verstellgriff 5 um einen Winkel in der Grössenordnung von etwa 45° verschwenkt werden, wobei sich die Bewegungsbahn B des Kurbelzapfens 4 bis zu einer Lage B' verändert, wie dies zusammen mit Fig. 2 bereits beschrieben wurde.

**Patentansprüche**

1. Bohr- und Meisselhammer,

a) mit einem in einem Führungszylinder (11) hin- und herbewegbaren Erregerkolben (12) zum Antrieb eines auf das Werkzeug einwirkenden Schlagkolbens,

b) mit einem an dem Erregerkolben (12) angelenkten, mit einem Kurbelzapfen (4) verbundenen Pleuel (13) und

c) mit einem Planetengetriebe

c1) mit einem angetriebenen Planetenträger (3),

c2) mit einem auf dem Planetenträger (3) gelagerten, angetriebenen Planetenzahnrad (2), das achsparallel und betriebsfest mit dem Kurbelzapfen (4) verbunden ist, und

c3) mit einem feststehenden, innen verzahnten, mit dem Planetenzahnrad (2) kämmenden Zahnkranz (1),

d) wobei der Wälzkreisdurchmesser des Zahnkranzes (1) das Doppelte des Wälzkreisdurchmessers des Planetenzahnrades (2) beträgt, und

e) die Achse des Kurbelzapfens (4) ausserhalb der Mitte des Planetenzahnrades (2) verläuft, dadurch gekennzeichnet, dass

f) zur Verstellung des Hubes des Erregerkolbens (12) ein auf die Lage des Kurbelzapfens (4) einwirkender, feststellbarer Verstellgriff (5) vorgesehen ist, der

f1) zum Ändern der Drehwinkellage des Zahnkranzes (1) an dessen Aussenseite angebracht ist.

f2) sich im wesentlichen radial zu dem Zahnkranz (1) erstreckt und

f3) an das Planetengetriebe tragenden Gehäuseteilen (6a, 6b; 7) in seiner jeweiligen Lage feststellbar ist, dass

g) der Verstellgriff (5) in zwei bogenförmigen Aussparungen (23, 24) der Gehäuseteile (6a, 6b; 7) angeordnet ist und einen am Zahnkranz (1) befestigten Gewindebolzen (8) aufweist,

h) auf dessen Aussenseite eine konische, mit der einen Aussparung (23) in Klemmeingriff bringbare, verschiebbare Büchse (9) aufgesetzt ist,

i) auf die mittels des Gewindebolzens (8) ein Klemmkopf (10) aufschraubbar ist.

2. Bohr- und Meisselhammer nach Anspruch 1, dadurch gekennzeichnet, dass der Zahnkranz (1) aus einer Lage, in der die Bahnkurve (B) des Kurbelzapfens (4) parallel zum Führungszylinder (11) verläuft, um etwa 45° verschwenkbar angeordnet ist.

3. Bohr- und Meisselhammer nach einem der Ansprüche 1 oder 2, dadurch gekennzeichnet, dass der Kurbelzapfen (4) etwa im Bereich des Wälzkreises des Planetenrades (2) angeordnet ist.

4. Bohr- und Meisselhammer nach einem der Ansprüche 1 bis 3, dadurch gekennzeichnet, dass der im Zahnkranz (1) drehbar gelagerte Planetenträger (3) auf der einen Seite einen Antriebszapfen (15) und auf der anderen Seite das Planetenrad (2) trägt, das einstückig mit dem Kurbelzapfen (4) ausgebildet ist, und dass der Kurbelzapfen (4) auf der dem Planetenträger (3) abgewandten Seite des Planetenrades (2) sitzt.

**Claims**

1. A hammer drill and chisel
a) having an exciting piston (12) reciprocable in a guide cylinder (11) for the drive of a percussion piston acting on the tool,
b) having a connecting rod (13) articulated on the exciting piston (12) and connected to a crankpin (4) and
c) having an epicyclic gear
c1) with a driven satellite carrier (3),
c2) with a driven planet pinion (2) which is mounted on the satellite carrier (3) and which is operably connected to the crankpin (4) parallel to its axis and
c3) with a stationary, internally toothed rim meshing with the planet pinion (2)
d) wherein the pitch circle diameter of the toothed rim (1) amounts to double the pitch circle diameter of the planet pinion (2) and
e) the axis of the crankpin (4) extends outside the centre of the planet pinion (2), characterised in that
f) in order to adjust the stroke of the exciting piston (12), a locatable adjusting handle (5) is provided which acts on the position of the crankpin (4) and which
f1) in order to alter the position of the angle of rotation of the toothed rim (1) is mounted on its outside,
f2) extends substantially radially to the toothed rim (1) and
f3) can be located in its particular position on housing parts (6a, 6b; 7) carrying the epicyclic gear, that

g) the adjusting handle (5) is disposed in two arcuate recesses (23, 24) in the housing parts (6a, 6b; 7) and comprises a threaded bolt (8) which is secured to the toothed rim (1)

h) and on the outside of which there is placed a tapered, displaceable bush which can be brought into clamping engagement with the one recess (23)

i) and onto which a clamping head (10) can be screwed by means of the threaded bolt (8).

2. A hammer drill and chisel according to Claim 1, characterised in that the toothed rim (1) is arranged to pivot through about 45° out of a position in which the path line (B) of the crankpin (4) extends parallel to the guide cylinder (11).

3.) A hammer drill and chisel according to one of the Claims 1 or 2, characterised in that the crankpin (4) is disposed substantially in the region of the pitch circle of the planet pinion (2).

4. A hammer drill and chisel according to one of the Claims 1 to 3, characterised in that the satellite carrier (3), which is mounted for rotation in the toothed rim (1), carries a drive journal (15) at the one side and the planet pinion (2) at the other side, which planet pinion is made integral with the crankpin (4), and that the crankpin (4) is mounted at the side of the planet pinion (2) remote from the satellite carrier (3).

**Revendications**

1. Marteau perforateur et burineur comprenant
a) un piston de manœuvre (12) pouvant effectuer un mouvement de va-et-vient dans un cylindre de guidage (11) en vue d'entraîner un piston de percussion exerçant son action sur un outil,
b) une bielle (13) articulée au piston de manœuvre (12) et reliée à un tourillon de manivelle (4), et
c) un engrenage planétaire comportant
c1) un support planétaire entraîné (3),
c2) une couronne planétaire dentée (2) entraînée et montée sur le support planétaire (3), qui est reliée au tourillon de manivelle (4) parallèlement à son axe et solidaire en rotation, et
c3) une couronne dentée (1) fixe et à denture interne, engrenant avec la pignon satellite (2),
d) le diamètre du cercle primitif de la couronne dentée (1) étant le double du diamètre du cercle primitif du pignon satellite (2), et
e) l'axe du tourillon de manivelle (4) passant à l'extérieur du centre du pignon satellite (2), caractérisé en ce que
f) pour régler la course du piston de manœuvre (12), on prévoit une poignée de réglage (5) réglable, exerçant son action sur la position du tourillon de manivelle (4), laquelle poignée
f1) est montée sur le côté extérieur de la couronne dentée (1) en vue de modifier sa position angulaire,
f2) s'étend sensiblement radialement à la couronne dentée (1), et
f3) peut être fixée dans la position désirée à des parties (6a, 6b; 7) du carter qui supportent l'engrenage planétaire,

g) la poignée de réglage (5) étant disposée dans deux évidements (23, 24) en forme d'arcs de cercle des parties (6a, 6b; 7) du carter et comprenant une broche filetée (8) fixée à la couronne denté (1),

h) une douille conique mobile (3) qui peut être amenée en engagement par serrage à l'intérieur d'un évidement (23) étant montée sur son coté extérieur,

i) douille sur laquelle peut être vissée une tête de serrage (10) au moyen de la broche filetée (8).

2. Marteau perforateur et burineur selon la revendication 1, caractérisé en ce que la couronne dentée (1) peut être pivotée sur environ 45° à partir d'une position dans laquelle la trajectoire (B) du tourillon de manivelle (4) est parallèle au cylindre de guidage (11).

3. Marteau perforateur et burineur selon la revendication 1 ou 2, caractérisé en ce que le tourillon de manivelle (4) est disposé sensiblement dans la région du cercle primitif du pignon satellite (2).

4. Marteau perforateur et burineur selon l'une des revendications 1 à 3, caractérisé en ce que le support planétaire (3) monté rotatif dans la couronne dentée (1) supporte sur un côté un tourillon d'entraînement (15) et sur l'autre côté le pignon satellite (2), constitué d'un seul tenant avec le tourillon de manivelle (4), et en ce que le tourillon de manivelle (4) est monté sur le côté du pignon satellite (2) qui est à l'opposé du support planétaire (3).

**Fig. 1**

**Fig. 2**

**Fig. 3**

# Fig. 4